# EUROPÄISCHE PATENTANMELDUNG

(11) **EP 4 461 574 A1**
(43) Veröffentlichungstag der Anmeldung: **13.11.2024**
(21) Anmeldenummer: 24165200.7
(22) Anmeldetag: 21.03.2024
(51) Int. Cl.: B60H 1/34

(54) **INNENRAUMKOMPONENTE FÜR EINEN LUFTAUSSTRÖMER, LUFTAUSSTRÖMER UND HERSTELLUNGSVERFAHREN DER INNENRAUMKOMPONENTE**

(30) Priorität: 12.04.2023 DE 102023203296
(71) Anmelder: VOLKSWAGEN AG, 38440 Wolfsburg (DE)
(72) Erfinder: Yilmaz, Zafer, 38442 Wolfsburg (DE)

(57) **Zusammenfassung**

Innenraumkomponente (5) für einen Luftausströmer eines Fahrzeugs, die als Gitterelement (6) zur Abdeckung einer Ausströmeröffnung des Luftausströmers ausgebildet ist und wenigstens eine Gitterstrebe (7) aufweist, die dazu ausgebildet ist, sich über eine Ausströmeröffnung des Luftausströmers zu erstrecken, wobei das Gitterelement (6) aus Kunststoff gefertigt, einstückig und aus einem faserverstärkten Kunststoff ausgebildet ist, und das Gitterelement (6) eine den Kunststoff zumindest auf einer Sichtseite des Gitterelements (6) überdeckende Beschichtung (11) aufweist.

## Beschreibung

Die Erfindung betrifft eine Innenraumkomponente für einen Luftausströmer eines Fahrzeugs, die als Gitterelement ausgebildet ist und wenigstens eine Gitterstrebe aufweist, die dazu ausgebildet ist, sich über eine Ausströmeröffnung des Luftausströmers zu erstrecken, wobei das Gitterelement einstückig und aus Kunststoff gefertigt ist.

Weiterhin betrifft die Erfindung einen Luftausströmer für ein Fahrzeug, insbesondere Kraftfahrzeug, mit einem Gehäuse, das eine Ausströmeröffnung bildet und mit einer an dem Gehäuse angeordneten und die Ausströmeröffnung an einer einem Innenraum des Fahrzeugs zuordenbaren oder zugeordneten Stirnseite des Gehäuses überdeckenden Innenraumkomponente.

Weiterhin betrifft die Erfindung ein Verfahren zum Herstellen der oben genannten Innenraumkomponente.

Innenraumkomponenten der eingangs genannten Art sind aus dem Stand der Technik bekannt. So wird beispielsweise in der Gebrauchsmusterschrift DE 20 2018 103 133 U1 eine gattungsgemäße Innenraumkomponente beschrieben, die mehrteilig ausgebildet ist und an einem einen Luftkanal mit einer Ausströmeröffnung ausbildenden Gehäuse angeordnet ist. Die Innenraumkomponente ist dabei aus Kunststoff hergestellt und weist eine Gitterstrebe auf, die sich über die Ausströmeröffnung erstreckt. Dabei ist die Gitterstrebe als separates Bauteil ausgebildet und an einem Rahmen der Innenraumkomponente befestigt.

Aus der Offenlegungsschrift DE 10 2020 207 151 A1 ist ein weiterer Luftausströmer mit einer Innenraumkomponente bekannt, bei welchem die Innenraumkomponente als Gitterelement ausgebildet ist und mehrere Gitterstreben aufweist, die sich parallel zueinander über eine Ausströmeröffnung erstrecken. Hierbei sind die Gitterstreben als Dekorlamellen aus Kunststoff gefertigt und weisen eine Chrombeschichtung auf.

Weiterhin ist aus der Offenlegungsschrift DE 10 2018 113 183 A1 eine Innenraumkomponente für einen Luftausströmer bekannt, die als Gitterelement ausgebildet und aus Kunststoff gefertigt ist.

Der vorliegenden Erfindung liegt die Aufgabe zugrunde, eine verbesserte Innenraumkomponente zu schaffen, die es insbesondere ermöglicht, zumindest eine besonders lange Gitterstreben abstützungsfrei derart auszubilden, dass sie eine ausreichende Biegesteifigkeit aufweist, um eine unerwünschte Verformung im Betrieb zu vermeiden, ohne dass dabei das äußere Erscheinungsbild der Innenraumkomponente leidet.

Die der Erfindung zugrunde liegende Aufgabe wird durch eine Innenraumkomponente mit den Merkmalen des Anspruchs 1 gelöst. Diese hat den Vorteil, dass aufgrund einer vorteilhaften Materialwahl die Gitterstrebe besonders steif und belastbar ausgebildet ist und die oben genannten Nachteile überwindet. Erfindungsgemäß ist hierzu vorgesehen, dass das Gitterelement einstückig und aus einem faserverstärkten Kunststoff ausgebildet ist und eine den Kunststoff zumindest auf einer Sichtseite des Gitterelements überdeckende Beschichtung aufweist. Durch die Faserverstärkung wird gewährleistet, dass die Stabilität der Gitterstrebe ausreichend hoch ist, um auch bei einer verhältnismäßig großen abstützungsfreien Längserstreckung die gewünschte Robustheit und Stabilität zu gewährleisten. Durch die Beschichtung wird unter anderem erreicht, dass die Fasern in dem Kunststoff von außen nicht mehr erkennbar sind. Darüber hinaus schützt die Beschichtung den faser-verstärkten Kunststoff vor vorzeitigem Verschleiß oder Alterungserscheinungen.

Gemäß einer bevorzugten Weiterbildung der Erfindung sind die Fasern im Kunststoff im Bereich der Gitterstrebe in Längserstreckung der Gitterstrebe ausgerichtet. Somit erstrecken sich die Fasern innerhalb der Gitterstrebe in der Längserstreckung der Gitterstrebe beziehungsweise parallel zu dieser, wodurch die Robustheit und Steifigkeit der Gitterstrebe optimiert wird. Zum Ausrichten der Fasern werden diese beispielsweise in einem Spritzgussverfahren oder Stranggussprozess ausgerichtet, solange der Kunststoff noch viskos oder flüssig ist.

Besonders bevorzugt wird als Beschichtung ein Lack eingesetzt, der den Kunststoff überdeckt. Dadurch wird der Kunststoff geschützt und die Innenraumkomponente erhält einen hochwertigen optischen Eindruck. Vorzugsweise wird ein schwarzer Lack verwendet.

Besonders bevorzugt ist die Beschichtung eine optisch matt oder glänzende Beschichtung. Hierdurch ist der optische Eindruck der Innenraumkomponente an unterschiedliche Randbedingungen vorteilhaft anpassbar.

Insbesondere ist die Beschichtung eine Chrombeschichtung oder eine chromfarbene Beschichtung. Durch diese Beschichtung erhält die Innenraumkomponente ein besonders hochwertig wirkendes Erscheinungsbild. Darüber hinaus wird durch die Chrombeschichtung der Kunststoff vorteilhaft verdeckt, sodass auch gegebenenfalls noch im Kunststoff erkennbare Fasern nicht mehr sichtbar sind.

Vorzugsweise erstreckt sich die Gitterstrebe mindestens 80 Millimeter, vorzugsweise mindestens 100 Millimeter, insbesondere mindestens 120 Millimeter abstützungsfrei. Somit liegt die Gitterstrebe für die oben genannten Längen frei über der Ausströmeröffnung, wenn die Innenraumkomponente an dem Luftausströmer montiert ist. Optional weist das Gitterelement keine zu den Gitterstreben senkrecht ausgerichtete Querstrebe auf, die die Gitterstrebe in ihrer Längserstreckung abstützen und dadurch stabilisieren könnte. Weist das Gitterelement eine oder mehrere Querstreben auf, die sich quer zu der zumindest einen Gitterstrebe erstrecken, so weisen die abstützungsfreien Abschnitte der Gitterstrebe mindestens 80 Millimeter, vorzugsweise eine Länge von mindestens 100 Millimeter oder besonders bevorzugt mindestens 120 Millimeter auf. Durch die erfindungsgemäße Ausbildung der Innenraumkomponente werden derartige Längen abstützungsfrei ermöglicht, ohne dass die Robustheit oder Steifheit der Gitterstrebe selbst leidet.

Der erfindungsgemäße Luftausströmer mit den Merkmalen des Anspruchs 7 zeichnet sich durch die erfindungsgemäße Ausbildung der Innenraumkomponente aus. Es ergeben sich hierdurch die oben bereits genannten Vorteile. Vorzugsweise weisen das Gehäuse und/oder die Innenraumkomponente Montagemittel auf, die eine Ausrichtung und/oder Befestigung von Innenraumkomponente und Gehäuse aneinander ermöglichen. So weist die Innenraumkomponente beispielsweise ein oder mehrere Befestigungsvorsprünge oder -haken auf, die mit entsprechenden beziehungsweise damit korrespondierenden Aufnahmen des Gehäuses zusammenwirken, um eine formschlüssige Verbindung, insbesondere werkzeugfrei, zu erzielen.

Das erfindungsgemäße Verfahren mit den Merkmalen des Anspruchs 8 zeichnet sich dadurch aus, dass das Gitterelement aus faserverstärktem Kunststoff gefertigt und zumindest auf einer Sichtseite des Gitterelements mit einer den Kunststoff überdeckenden Beschichtung versehen wird. Es ergeben sich hierdurch die oben bereits genannten Vorteile.

Insbesondere wird das Gitterelement durch ein Spritzgussverfahren oder Strangpressverfahren hergestellt, wobei die Fasern in dem Kunststoff zumindest im Bereich der Gitterstrebe in einem viskosen Zustand des Kunststoffs bevorzugt derart ausgerichtet werden, dass sie sich in Längserstreckung der Gitterstrebe erstrecken. Nach Aushärten des Kunststoffs verbleiben die Fasern in ihrem ausgerichteten Zustand und stützen somit die Gitterstrebe in Längserstreckung, wodurch ihre Robustheit und insbesondere Biegesteifigkeit erhöht wird.

Weiterhin ist bevorzugt vorgesehen, dass das Gitterelement mit einer matten, glänzenden, insbesondere schwarzen oder chromfarbenen Beschichtung, insbesondere mit einer Chrombeschichtung, versehen wird.. Es ergeben sich die oben bereits genannten Vorteile.

Weitere Vorteile und bevorzugte Merkmalen und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
- Figur 1: einen Luftausströmer in deiner vereinfachten perspektivischen Darstellung,
- Figuren 2A und: B eine Innenraumkomponente des Luftausströmers in einer perspektivischen Darstellung gemäß einem ersten Ausführungsbeispiel und
- Figuren 3A und B: die Innenraumkomponente in einer Draufsicht gemäß einem weiteren Ausführungsbeispiel.

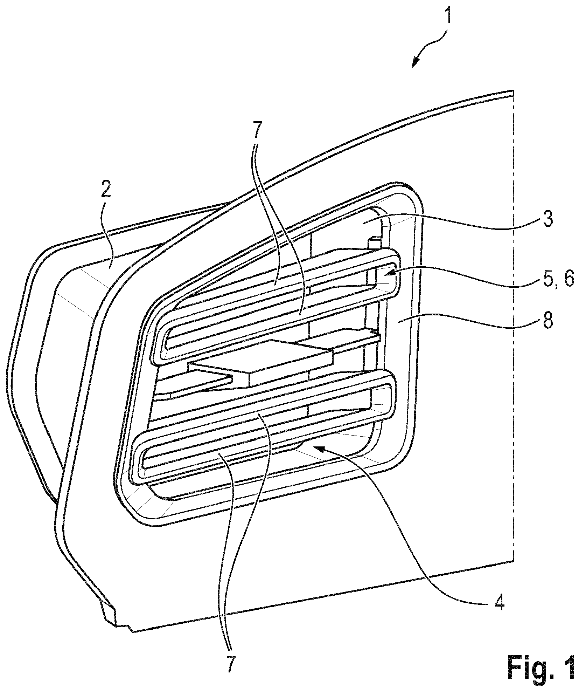

**Figur 1** zeigt in einer vereinfachten perspektivischen Darstellung einen vorteilhaften Luftausströmer 1 für ein hier nicht näher dargestelltes Kraftfahrzeug. Der Luftausströmer 1 weist ein Gehäuse 2 auf, das beispielsweise in das Armaturenbrett eines Kraftfahrzeugs einsetzbar oder eingesetzt ist. Das Gehäuse 2 bildet einen Luftkanal 3 aus, der in eine Ausströmeröffnung 4 mündet, die dem Innenraum des Fahrzeugs zugewandt ist.

An dem Gehäuse 2 ist dem Fahrzeuginnenraum zugewandt, eine Innenraumkomponente 5 angeordnet, die als Gitterelement 6 ausgebildet ist und dazu vorliegend vier Gitterstreben 7 aufweist, die sich parallel zueinander über die Ausströmeröffnung 4 erstrecken. Jeweils zwei der Längsstreben 7 sind endseitig miteinander verbunden und bilden somit einen Ring aus. Das Gitterelement 6 weist somit zwei Ringe auf, mit parallel zueinander angeordneten Abschnitten, die die Gitterstreben 7 ausbilden, und die sich jeweils streifenförmig über die Ausströmeröffnung 4 erstrecken. Einseitig sind die Gitterstreben 7 außerdem an einem Rahmen 8 gehalten oder mit diesem einstückig verbunden, der an dem Gehäuse 2 befestigt ist. Optional sind die Gitterstreben 7 alleine an dem Gehäuse 2 direkt gehalten.

Die Gitterstreben 7 weisen insbesondere in Längserstreckung eine Länge L von mindestens 80 Millimeter, vorzugsweise von mindestens 120 Millimeter auf.

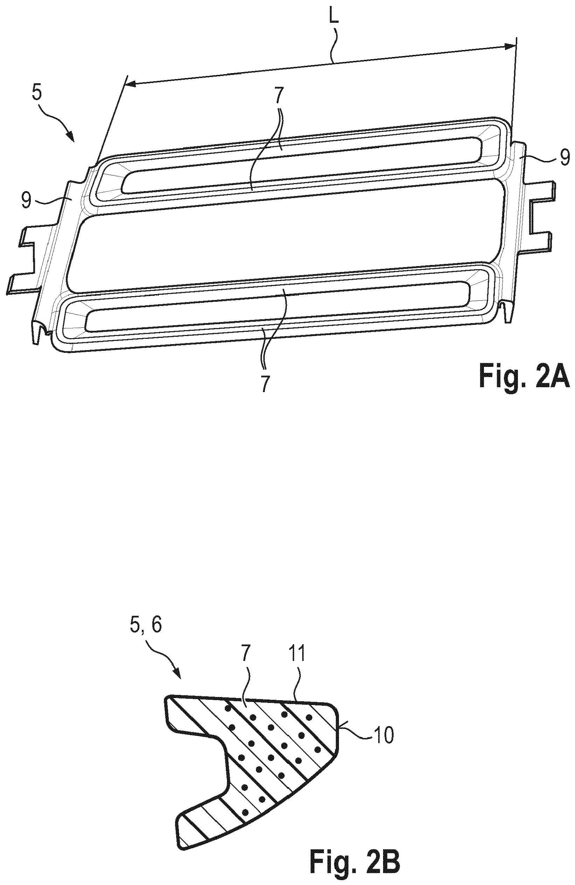

**Figur 2A** zeigt die Innenraumkomponente 5 in einer perspektivischen Einzelteildarstellung. Die Längsstreben 7 sind auf ihrer vom Fahrzeuginnenraum abgewandten Rückseite durch Verbindungsstreben 9 miteinander verbunden. In ihrer Längserstreckung sind die Gitterstreben 7 abstützungsfrei ausgebildet, so dass sie nur endseitig gestützt sind. Das Gitterelement 6 weist somit keine zusätzlich zu den einseitigen Verbindungsstreben 9 vorhandene Querstreben auf, an welchen die Gitterstreben 7 abgestützt werden könnten.

Die Innenraumkomponente 5 ist insgesamt aus Kunststoff gefertigt, wobei der Kunststoff ein faserverstärkter Kunststoff, insbesondere glasfaserverstärkter oder kohlenstofffaserverstärkter Kunststoff ist. Die in dem Kunststoff enthaltenen Fasern erstrecken sich in den jeweiligen Gitterstreben 7 jeweils in Längserstreckung der Gitterstreben 7 beziehungsweise parallel zu diesen, wie in **Figur 2A** durch vereinfacht dargestellte Fasern an einer der Gitterstrebe 7 vereinfacht dargestellt.

**Figur 2B** zeigt einen Querschnitt durch eine der Gitterstreben 7, die im Querschnitt jeweils gleich ausgebildet sind. Im Querschnitt ist die jeweilige Gitterstrebe 7 V-förmig ausgebildet, wobei sich die Gitterstrebe 7 in Richtung des Gehäuses 2 aufweitet beziehungsweise öffnet. Dadurch entsteht eine spitz zulaufende Sichtkante 10 an der Vorderseite, die bei bestimmungsgemäßem Gebrauch dem Fahrzeuginnenraum zugewandt ist. Da sich die Fasern in Längserstreckung der Gitterstrebe 7 erstrecken, sind sie in **Figur 2B** lediglich als Punkte dargestellt.

Außerdem ist die jeweilige Gitterstrebe 7 mit einer Beschichtung 11, insbesondere mit einer Lackbeschichtung, die einen insbesondere schwarzen matten oder glänzenden Lack aufweist, versehen. Optional ist die Gitterstrebe 7 mit Chrom beschichtet oder mit einer chromfarbenen Beschichtung 11.

Durch die Längserstreckung der Fasern wird erreicht, dass die Gitterstreben 7 besonders biegesteif ausgebildet sind und dadurch trotz der verhältnismäßig großen Länge L ein ungewolltes Durchbiegen beispielsweise in Richtung des Gehäuses 2 verhindern. Darüber hinaus ergibt sich durch die Längsausrichtung der Fasern der Vorteil, dass diese zumindest im Wesentlichen nicht aus den Gitterstreben 7 herausführen und an der Oberfläche erkennbar sind. Darüber hinaus wird durch die Beschichtung erreicht, dass der Kunststoff mit den darin liegenden Fasern sicher vor äußeren Einflüssen geschützt ist und dass das Gitterelement 6 insoweit optisch aufgewertet wird, dass selbst dann, wenn Fasern im Kunststoff an oder nahe zu der Oberfläche erkennbar sein sollten, diese durch die Beschichtung verdeckt sind.

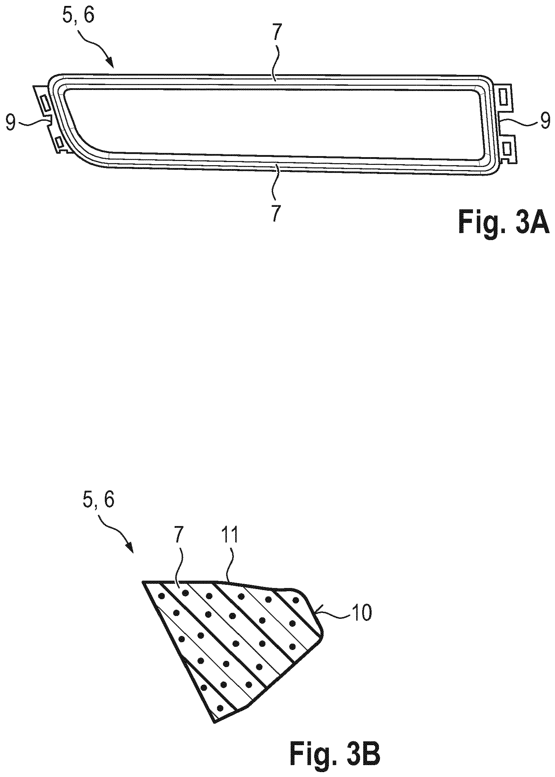

**Figuren 3A und 3B** zeigen ein weiteres Ausführungsbeispiel der Innenraumkomponente 5, die sich von den vorhergehenden Ausführungsbeispielen dadurch unterscheidet, dass sie lediglich zwei Gitterstrebe 7 aufweist, die parallel zueinander verlaufen, wie in der Draufsicht von **Figur 3A** gezeigt. Darüber hinaus weisen die Gitterstreben 7 im Querschnitt gesehen, wie in **Figur 3B** gezeigt, einen Δ-förmigen Querschnitt auf. Auch hier weist die Innenraumkomponente 5 vorzugsweise die Beschichtung 11, beispielsweise in Form der Chrombeschichtung, auf.

## Patentansprüche

1. Innenraumkomponente (5) für einen Luftausströmer (1) eines Fahrzeugs, die als Gitterelement (6) des Luftausströmers (1) ausgebildet ist und wenigstens eine Gitterstrebe (7) aufweist, die dazu ausgebildet ist, sich über eine Ausströmeröffnung (4) des Luftausströmers (1) zu erstrecken, wobei das Gitterelement (6) aus Kunststoff gefertigt ist, **dadurch gekennzeichnet, dass** das das Gitterelement (6) einstückig und aus einem faserverstärkten Kunststoff ausgebildet ist und eine den Kunststoff zumindest auf einer Sichtseite des Gitterelements (6) überdeckende Beschichtung (11) aufweist.

2. Innenraumkomponente (5) nach Anspruch 1, **dadurch gekennzeichnet, dass** Fasern im Kunststoff im Bereich der Gitterstrebe (7) in Längserstreckung der Gitterstrebe (7) ausgerichtet sind.

3. Innenraumkomponente (5) nach einem der vorhergehenden Ansprüche, **dadurch gekennzeichnet, dass** die Beschichtung (11) ein insbesondere schwarzer Lack ist.

4. Innenraumkomponente (5) nach einem der vorhergehenden Ansprüche, **dadurch gekennzeichnet, dass** die Beschichtung (11) ein optisch matt oder glänzender Lack ist.

5. Innenraumkomponente (5) nach einem der Ansprüche 1 und 2, **dadurch gekennzeichnet, dass** die Beschichtung (11) eine Chrombeschichtung oder eine Beschichtung in Chromfarbe ist.

6. Innenraumkomponente (5) nach einem der vorhergehenden Ansprüche, **dadurch gekennzeichnet, dass** sich die Gitterstrebe (7) mindestens 80 Millimeter, vorzugsweise mindestens 100 Millimeter, besonders bevorzugt mindestens 120 Millimeter abstützungsfrei erstreckt.

7. Luftausströmer (1) für ein Fahrzeug, mit einem Gehäuse (2), das eine Ausströmeröffnung (4) bildet und mit eine an dem Gehäuse (2) angeordnete und die Ausströmeröffnung (4) an einer einem Innenraum des Fahrzeugs zuordenbaren oder zugeordneten Stirnseite des Gehäuses (2) überdeckenden Innenraumkomponente (5), **gekennzeichnet durch** die Ausbildung der Innenraumkomponente (5) gemäß einem der Ansprüche 1 bis 6.

8. Verfahren zum Herstellen einer Innenraumkomponente (5) für einen Luftausströmer (1) eines Fahrzeugs, die als Gitterelement (6) zur Abdeckung einer Ausströmeröffnung (4) des Luftausströmers (1) ausgebildet ist und wenigstens eine Gitterstrebe (7) aufweist, die dazu ausgebildet ist, sich über die Ausströmeröffnung (4) zu erstrecken, wobei das Gitterelement (6) einstückig und aus Kunststoff gefertigt wird, **dadurch gekennzeichnet, dass** das Gitterelement (6) aus faserverstärktem Kunststoff gefertigt und zumindest auf einer Sichtseite des Gitterelements (6) mit einer den Kunststoff überdeckende Beschichtung (11) versehen wird.

9. Verfahren nach Anspruch 8, **dadurch gekennzeichnet, dass** das Gitterelement (6) durch ein Spritzgussverfahren hergestellt wird und dass Fasern in dem Kunststoff zumindest in der Gitterstrebe (7) in einem noch viskosen Zustand des Kunststoff derart ausgerichtet werden, dass sie sich in Längserstreckung der Gitterstrebe (7) erstrecken.

10. Verfahren nach einem der Ansprüche 8 oder 9, **dadurch gekennzeichnet, dass** das Gitterelement (6) mit einer matten oder glänzenden, insbesondere schwarzen Beschichtung oder mit einer chromfarbenen Beschichtung, insbesondere mit einer Chrombeschichtung, versehen wird.
